# EUROPÄISCHE PATENTSCHRIFT

(11) **EP 1 019 645 B1**
(45) Veröffentlichungstag und Bekanntmachung des Hinweises auf die Patenterteilung: **12.06.2002**
(21) Anmeldenummer: 98958179.8
(22) Anmeldetag: 28.09.1998
(51) Int. Cl.: F16H 29/08

(54) **GETRIEBE MIT STUFENLOS EINSTELLBARER ÜBERSETZUNG**
GEARBOX WITH CONTINUOUSLY ADJUSTABLE MULTIPLICATION
TRANSMISSION A DEMULTIPLICATION PROGRESSIVE

(30) Priorität: 01.10.1997 DE 19743483
(43) Veröffentlichungstag der Anmeldung: 19.07.2000
(73) Patentinhaber: Berger, Matthias, 99423 Weimar (DE)
(72) Erfinder: Berger, Matthias, 99423 Weimar (DE)
(74) Vertreter: Wagner, Gerd, Dipl.-Phys.
(86) Internationale Anmeldenummer: DE9802899
(87) Internationale Veröffentlichungsnummer: WO9918365

(56) Entgegenhaltungen:
- DE-C- 474 205
- GB-A- 2 130 671
- GB-A- 2 137 724

## Beschreibung

Die Erfindung betrifft ein Getriebe mit stufenlos einstellbarer Übersetzung zur Wandlung von Drehzahlen und Drehmomenten zwischen zwei Wellen. Derartiue Wandler finden in der gesamten Antriebstechnik, insbesondere bei Werkzeugmaschinen und bei Fahrzeugantrieben Verwendung.

### Stand der Technik

Antriebsmaschinen sind in ihrer mechanischen Leistung drehzahlabhäng. Sie arbeiten üblicherweise in ihrem wirtschaftlichsten Drehzahlbereich mit günstigem Energieverbrauch oder im Bereich maximaler abgegebener Leistung. Dagegen sollen die angetriebenen Maschinen entsprechend ihrer Verwendung bzw. ihrem jeweiligen Betriebszustand unterschiedliche Drehzahlen aufweisen. Durch Wechselgetriebe mit entsprechenden Übersetzungsverhältnissen werden deshalb die Drehzahlen von Antriebseinheit und angetriebener Maschine einander angepaßt. So kann bei optimaler Einstellung des Übersetzungsverhältnisses der Verlust an Motorleistung gering gehalten werden. Mit Getrieben mit stufenlos einstellbarer Übersetzung ist bei entsprechendem Wirkungsgrad der Anordnung eine optimale Übertragung der Drehbewegung bei geringem Leistungsverlust möglich.

Bei derartigen stufenlosen Drehzahlwandlern unterscheidet man entsprechend ihren Arbeitsprinzipien mechanische, elektrische und hydraulische Wandler.

Mechanische Systeme zur Drehzahlwandlung sind als Reibräder- und Zugmittelgetriebe bekannt geworden. Bei den Reibrädergetrieben wird die Bewegung (Drehmoment, Drehzahl) durch Reibungsschluß an rotationssymmetrischen Körpern mit stufenlos veränderbarem Wirkdurchmesser bzw. -umfang übertragen. Die erforderliche Reibung zwischen den Reibrädern kann nur durch große Anpreßkräfte erreicht werden. Diese bedingen aber eine hohe Materialbeanspruchung an den beiden Berührungspunkten bzw. -linien und stellen eine erhebliche Belastung für deren Lager und die Getriebewellen dar. Reibrädergetriebe sind zudem mit einem erheblichen Schlupf behaftet, der wiederum einen verringerten Wirkungsgrad der Anordnung zur Folge hat.

Zugmittelgetriebe arbeiten als Kettengetriebe oder Riemengetriebe mit Antriebs- und Abtriebsgliedern aus je einem Paar Kegelscheiben, die eine Kette bzw. ein Riemen endlos umhüllt. Sie arbeiten nach dem Prinzip der stufenlosen Verstellung des Wirkdurchmessers der Kegelscheiben, wobei mindestens eine der Kegelscheiben axial verstellbar ist. Riemengetriebe werden allerdings nur für kleinere Leistungen genutzt. Kettengetriebe vorzugsweise bei stationären Maschinen verwendet.

Unter den hydraulischen Getrieben mit stufenlos veränderbarer Drehzahl bestehen die hydrostatischen Drehzahlwandler aus der Kombination von einer Zellenpumpe und einem Zellenmotor, wobei die Pumpe eine Flüssigkeit in den Motor befördert und die Drehzahl des Zellenmotors (Abtriebsteil) von der Fördermenge der Pumpe bzw. der Schluckmenge des Motors abhängig ist. Bei hydrodynamischen Drehzahlwandlern mit einer Pumpe und einem Turbinenrad wird zur Kraftübertragung die Flüssigkeitsströmung genutzt.
Die hydraulischen Getriebe sind in großem Maße schlupfbehaftet und erfordern einen hohen Aufwand.

Ebenso sind elektrische stufenlose Getriebe wegen der nicht unbeträchtlichen Anlagekosten nur für spezielle Anwendungszwecke geeignet und sollen deshalb hier nicht weiter berücksichtigt werden.

Zu den mechanischen, stufenlosen Drehzahlwandlern gehören aber auch die Freilaufgetriebe, oft als Schaltwerksgetriebe bezeichnet, die eine gleichförmige Drehbewegung einer Antriebswelle in periodische Schwingungen oder ungleichmäßige Drehbewegungen umformen. Diese werden im Bereich der Geschwindigkeitsspitze mittels Freilauf in eine gleichgerichtete Drehbewegung der Abtriebswelle umgewandelt. Um die Ungleichmäßigkeit der Drehbewegung zu verringern und annähernd konstante Übersetzungsverhältnisse zu erzielen, verwendet man auf der Antriebswelle Koppel- oder auch Kurvengetriebe in Mehrfachausführung, die zueinander phasenverschoben arbeiten. Durch die Überlagerung der einzelnen Bewegungskurven erhält man eine mehr oder weniger dicht um einen Mittelwert schwankende Größe für die Winkelgeschwindigkeit der Abtriebswelle, wobei diese Schwankungen um so geringer ausfallen. je größer die Zahl der nebeneinander angeordneten und mit Phasenverschiebung arbeitenden Einzelgetriebe ist.
Die noch vorhandene Ungleichförrnigkeit der Drehbewegung kann erhebliche Belastungsstöße hervorrufen und verursacht dadurch einen hohen Verschleiß und eine geringe Lebensdauer des Getriebes. Die bekannt gewordenen Schaltwerksgetriebe sind daher auch nur für geringe mechanische Leistungen ausgelegt.

Es sind aber auch schon Getriebe mit absatzweise treibenden Gliedern vorgeschlagen worden, die eine prinzipielle Gleichförmigkeit der Übersetzung anstreben. Im Ergebnis sind diese Lösungen aber entweder nicht zufriedenstellend, nicht genügend verschleißfest oder sie erfordern einen hohen baulichen Aufwand.

In DE-PS 474 205 wird nun eine Variante eines Schaltwerksgetriebes vorgeschlagen, bei dem die Drehbewegung der Antriebswelle mittels mehrerer auf der treibenden Welle angeordneter Kurvenscheiben in eine Hin- und Herbewegung von Schubstangen und unter Zwischenschaltung einer veränderlichen Übersetzungseinrichtung in eine Hin- und Herbewegung von Zahnstangen umgewandelt wird, die anschließend über Zahnräder und Sperrkupplungen (Freilaufkupplungen) nacheinander auf die Abtriebswelle einwirken und diese antreiben. Die Übersetzungseinrichtung besteht aus einem zweiarmigen Hebel mit verstellbarem Drehpunkt zur Veränderung der jeweils wirksamen Hebellängen und damit auch der Übersetzungsgröße. Während der Kraftübertragungsphase bewegen sich die Zahnstangen mit gleichbleibender Geschwindigkeit und können somit die Abtriebswelle mit gleichbleibender Winkelgeschwindigkeit antreiben.

Auch in dem Getriebesystem nach US-PS 45 65 105 erfolgt die Bewegungsübertragung von der An- auf die Abtriebswelle über mit der antreibenden Welle umlaufenden Kurvenscheiben und Abtastglieder, welche die Drehbewegung in je eine Translationsbewegung umformen, die ebenfalls über je einen drehbar gelagerten Hebel mit verstellbarer Drehachse auf je ein Zahnstangen/Zahnrad-Teilgetriebe übertragen und unter Zwischenschaltung je eines Freilaufs in eine Drehbewegung der getriebenen Welle umgewandelt wird.

Ein wesentlicher Mangel dieser Getriebesysteme besteht darin, daß die bei der Umsetzung der Translationsbewegung der Zahnstange in die Drehbewegung des Zahnrads auftretenden Verschleißerscheinungen, die vor allem durch Gleitreibungseffekte hervorgerufen werden, gerade im Dauerbetrieb von beträchtlicher Größe sind und somit die Zuverlässigkeit des Gesamtgetriebes erheblich beeinträchtigen können. Diese Verschleißerscheinungen betreffen besonders diejenigen Bereiche der Verzahnung von Zahnstange und Zahnrad, die bei der periodischen Belastung im Dauerbetrieb häufiger einer besonders großen mechanischen Belastung ausgesetzt sind als andere Bereiche. Die ungleichmäßige Verteilung des Materialabtrages durch Verschleiß infolge der ungleichmäßigen Beanspruchung der zur Verfügung stehenden Hubstrecke der Zahnstange wird noch dadurch verstärkt, daß bei einem - infolge Vergrößerung der Ubersetzungseinstellung - verringerten Hub (Verringerung der Länge der Hubstrecke) die zu übertragende Kraft - unter der Voraussetzung einer konstanten Übertragungsleistung - noch zunimmt.
Die starke und vor allem auch ungleichmäßige Abnutzung an den funktionsbestimmenden Kontaktflächen der Verzahnung hat aber Abweichungen von der gewünschten Relativbewegung der Getriebemittel zur Folge, die wiederum die Ursache für einen rasch fortschreitenden Verschleißprozeß sind.
Zusätzlich entsteht eine Ungleichmäßigkeit im Getriebelauf mit der Frequenz des Zahneingriffs, weil sich die Flankenbereiche jedes Zahnes ungleichmäßig abnutzen, wobei die Verschleißvorgänge am Zahnfuß am ausgeprägtesten sind.
Die angeführten Nachteile verringern die Zuverlässigkeit und Betriebsdauer derartiger Getriebesvsteme beträchtlich.

### Darstellung der Erfindung

Es ist daher die Aufgabe der Erfindung, ein mechanisches Getriebe mit kontinuierlich veränderbarem Übersetzungsverhältnis mit möglichst gleichförmiger Übertragung der Drehbewegung der Antriebs- auf die Abtriebswelle und möglichst geringen Verschleißerscheinungen an den funktionsbestimmenden Kontaktflächen, insbesondere des abtriebsseitigen Getriebe-Teilsystems, zu schaffen. Dadurch soll sich die Zuverlässigkeit des Gesamtsystems verbessern sowie dessen maximale Betriebsdauer erhöhen. Weiterhin soll das mit absatzweise treibenden Gliedern arbeitende mechanische Getriebe zur stufenlosen Drehzahl- bzw. Drehmomentwandlung für einen Einsatz innerhalb eines großen Bereiches zu übertragender mechanischer Leistung geeignet sein. Es soll außerdem schlupffrei sein und mit einem hohen Wirkungsgrad arbeiten.

Erfindungsgemäß erfolgt die Lösung der Aufgabe durch die im Hauptanspruch definierte Getriebeanordnung mit stufenlos einstellbarer Übersetzung.

Das Getriebe entsprechend der Erfindung besitzt wenigstens zwei Getriebeeinheiten, die - unter der Voraussetzung gerade konstant gehaltener Übersetzungseinstellung - die gleichförmige Drehbewegung einer Antriebswelle in solche Drehschwingungen umwandeln, die jeweils einen Abschnitt gleichförmiger Drehbewegung mit einer stufenlos vorwählbaren Winkelgeschwindigkeit enthalten. Die Getriebeeinheiten sind so aufeinander abgestimmt, daß sich zu jedem Zeitpunkt wenigstens eine Getriebeeinheit in dem Abschnitt konstanter Drehgeschwindigkeit befindet und somit auch wenigstens eine Getriebeeinheit die Abtriebswelle über eine schaltbare oder eine selbstschaltende Kupplung (z.B. Freilauf) gleichförmig treiben kann.
Zur Erzeugung einer derartigen Drehschwingung formt jede Getriebeeinheit die gleichfdrmige Drehbewegung der Antriebswelle mit einem ersten Kraftübertragungsmittel in eine in etwa periodische Bewegung um, die für einen gewissen Zeitabschnitt geradlinig gleichförmig ist. Durch eine mit einem Übersetzungssteller stufenlos einstellbare Übersetzungseinrichtung wird diese Bewegung dann in eine andere in etwa periodische Bewegung umgewandelt, die für wenigstens einen Teil des besagten Zeitabschnittes eine Translationsbewegung mit einer von der Übersetzungseinstellung abhängigen (anderen) konstanten Geschwindigkeit darstellt. Diese Bewegung wird nun mittels eines zweiten Kraftübertragungsmittels in die schon beschriebene Drehschwingung umgeformt.

Im erfindungsgemäßen Getriebeaufbau, bei dem ein ebenes Kurvengetriebe die Umwandlung der übersetzten gleichförmigen Translationsbewegung in die gleichförmige Rotationsbewegung der getriebenen Welle vornimmt, ist die Materialbeanspruchung der Getriebeelemente infolge Reibung wesentlich geringer, weil diese hierbei vor allem als Rollreibung auftritt, die um Größenordnungen kleiner als die Gleitreibung bei der Bewegungsübertragung durch Zahnstange/Zahnrad bei den obengenannten Getriebesystemen sein kann. Der Materialabtrag bzw. Verschleiß verringert sich und es verbessert sich dadurch die Arbeitsweise des Gesamtgetriebes hinsichtlich der Gleichförmigkeit seiner Bewegungsabläufe und es erhöht sich dessen Nutzungsdauer.

### Zeichnungen und Beschreibung der Ausrührungsbeispiele

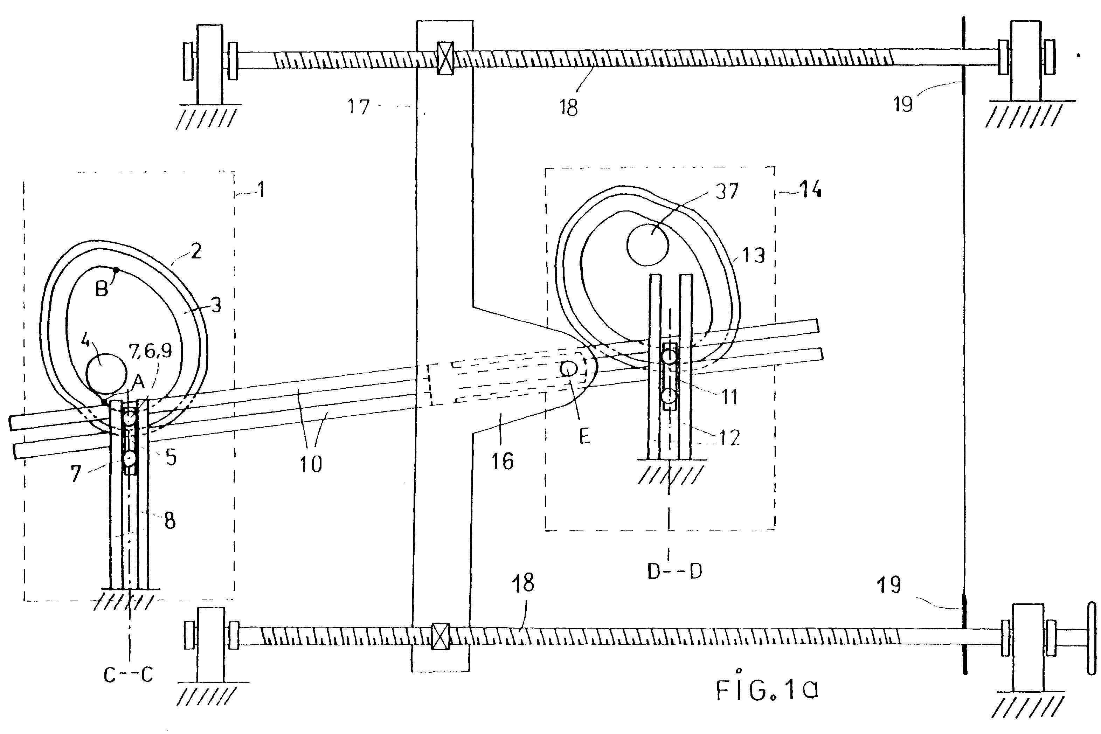

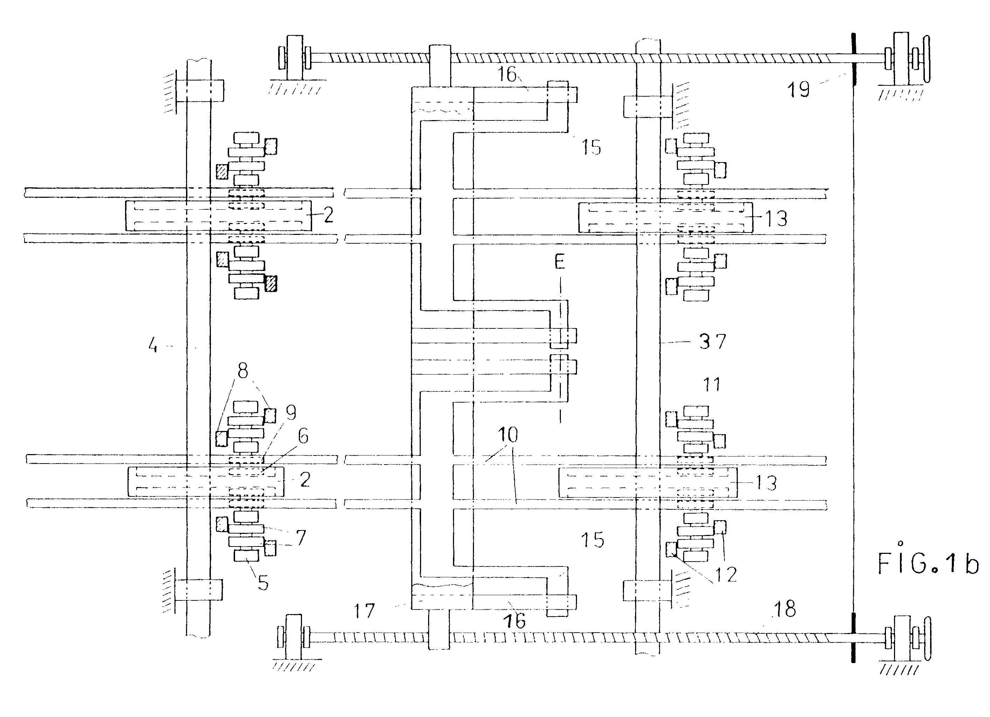

Die Erfindung soll anhand von mehreren Ausführungsbeispielen und dazugehörigen Zeichnungen näher erläutert werden. (Es wird dabei stets vorausgesetzt, daß die Übersetzungseinstellung über die hier betrachteten Zeitabschnitte gerade konstant gehalten wird und sich die Antriebswelle gleichförmig dreht.) Es zeigen
Fig. 1 a eine Getriebeeinheit eines Getriebes gemäß der Erfindung in Seitenansicht,
Fig. 1 b das Getriebe nach Fig. 1 a in Draufsicht,
Fig. 2 a schematisch und in Seitenansicht ein erfindungsgemäßes Getriebe bei entfernten Kurvenscheiben 20b, 21b und 22b, bei dem ein Kurvenglied antriebsseitig (erstes Kraftübertragungsmittel) zwei Getriebeeinheiten antreibt,

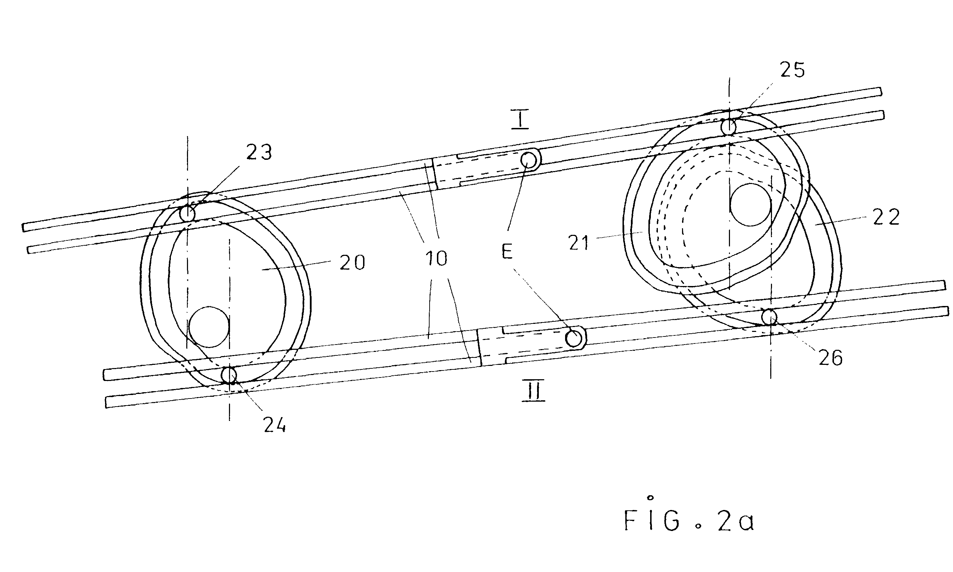

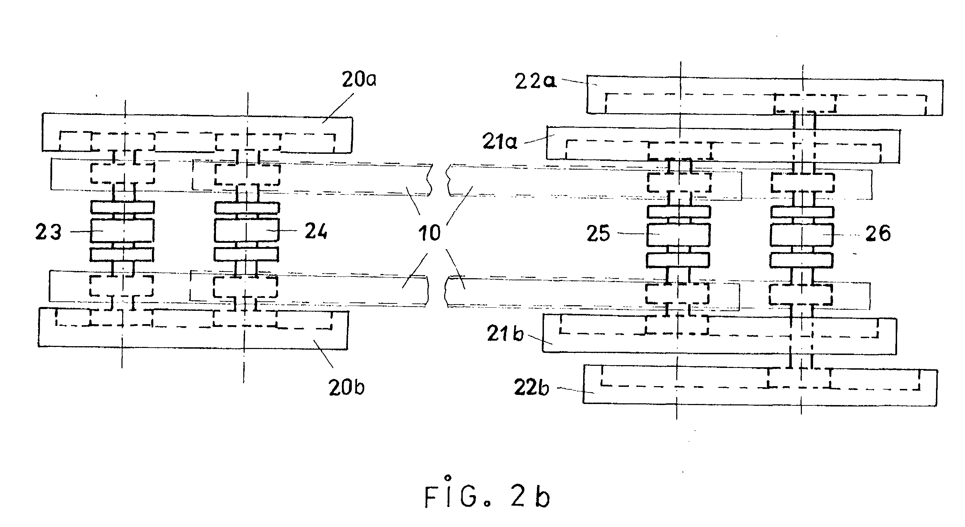

Fig. 2 b die Fig. 2 a in Draufsicht und

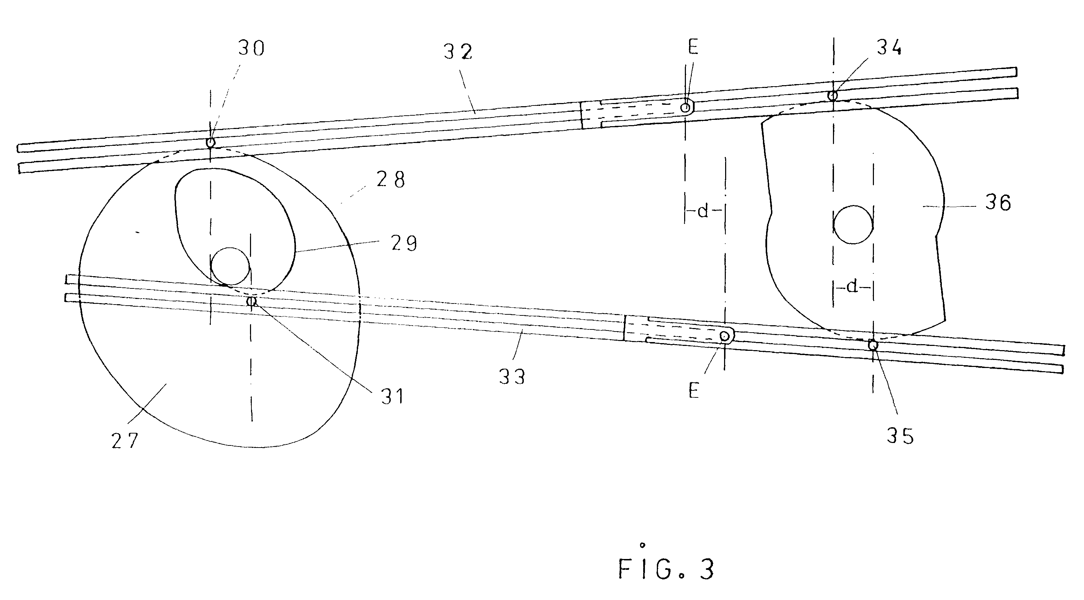

Fig. 3 schematisch eine Getriebeeinheit eines Ausführungsbeispiels nach Fig. 1 a, b mit Mitteln zum Massenausgleich und zum Lagerkräfteausgleich in Seitenansicht (es sind nur die inneren Flanken der Nutkurven von An- und Abtriebsscheibe dargestellt).

In den Figuren 1 a und 1 b ist schematisch ein Getriebe gemäß der Erfindung dargestellt, dessen zwei Getriebeeinheiten axial nebeneinander angeordnet sind. Aus Gründen der Übersichtlichkeit zeigt die Figur 1a allerdings nur eine der beiden, gleich aufgebauten Getriebeeinheiten. Als ein erstes Kraftübertragungsmittel 1 wird ein ebenes Kurvengetriebe mit einer Kurvenscheibe als Kurvenglied 2 verwendet, die beidseitig mit einer Nutkurve 3 versehen ist. Das Kurvenglied ist verdrehfest mit einer Antriebswelle 4 verbunden. Im Lastbereich - in der Figur der Bereich zwischen Position A und Position B bei rechtsdrehender Scheibe - hat die Kurvenflanke der Nutkurve die Gestalt einer Kreisevolvente. Unter dem Lastbereich soll der Bereich der Kurvenflanke verstanden werden, der zur Kraftübertragung bei konstanter Übersetzungseinstellung dient. Als Eingriffsglied 5 dient ein Hubschlitten mit Kurvenrollen 6. Das Eingriffsglied wird mittels Rollen 7 entlang von Führungsschienen 8 in einer Führungsbahn C―C geradlinig geführt. Mit Hilfe von Hebelschienenrollen 9, die im Ausführungsbeispiel auf derselben Achse wie die Kurvenrollen 6 gelagert sind, wird die Bewegung des Hubschlittens auf ein Hebelsystem mit Hebelschienen 10 übertragen. Das drehbar gelagerte Hebelsystem bewegt einen Hubschlitten, der als Eingriffsglied 11 für ein zweites Kraftübertragungsmittel 14 dient. Er ist von gleichem Aufbau wie das Eingriffsglied 5 und wird durch Führungsschienen 12 in einer Führungsbahn D―D geführt, die parallel zu der Führungsbahn C―C und den Führungsschienen 8 verläuft. Er treibt mit seiner Kurvenrolle das Kurvenglied 13 des Kraftübertragungsmittels 14, das analog dem Kurvenglied 2 ausgebildet ist und Drehschwingungen ausführt. Von diesen Drehschwingungen werden jeweils in der Kraftübertragungsphase die Abschnitte gleichförmiger Drehbewegung über eine - hier nicht dargestellte - selbstschaltende oder schaltbare Kupplung auf eine Abtriebswelle 37 übertragen. Die drehbare Lagerung des Hebelsystems erfolgt in Lagerhaltern 16 mittels durch Kröpfung versetzt angeordneten Achsstummeln 15. Die Lagerhalter sind an einem Rahmen 17 befestigt, der unter Verwendung von Gewindespindeln 18 relativ zum Gehäuse verschoben und in der vorgewählten Position fixiert werden kann. Die Verdrehung der Gewindespindeln erfolgt immer gleichsinnig und um jeweils gleiche Beträge, z.B. unter Anwendung eines Kettengetriebes 19.

Unter der Voraussetzung einer gleichförmigen Drehbewegung der Antriebswelle 4 führt das Eingriffsglied 5 eine schwingende geradlinige Bewegung aus. die in der Kraftübertragungsphase eine von der Übersetzungseinstellung unabhängige gleichförmige Bewegung darstellt. Hingegen führt das Eingriffsglied 11 eine schwingende geradlinige Bewegung aus, die in der Kraftübertragungsphase gleichförmig ist und deren (konstante) Geschwindigkeit von der jeweiligen Übersetzungseinstellung abhängt. Das Übersetzungsverhältnis bestimmt sich aus dem Verhältnis der wirksamen Hebellängen des Hebelsystems. Dieses ist wiederum durch das Verhältnis der Abstände zwischen dem Drehpunkt E des Hebelsystems und den Führungsbahnen C―C, D--D der Eingriffsglieder definiert. Diese Abstände werden durch die Positionierung des Rahmens 17 mit Hilfe der Gewindespindeln 18 festgelegt, da der Rahmen 17 die Lagerhalter 16 für die drehbare Lagerung des Hebelsystems trägt. Durch die Verdrehung der Gewindespindeln kann somit das Übersetzungsverhältnis stufenlos verstellt werden und innerhalb gewisser Grenzen jeden beliebigen, vorgegebenen Wert annehmen. Die versetzte Anordnung der Achsstummel 15 ermöglicht es. den Drehpunkt E des Hebelsystems bis zur Führungsbahn D―D und auch darüber hinaus zu verschieben. Dadurch kann die Abtriebsdrehzahl bis auf den Wert Null abgesenkt und bei einer Ausstattung mit geeigneten Kupplungen auch eine Umkehr der Drehrichtung der Abtriebswelle 37 (bei unveränderter Antriebsrichtung) vorgenommen werden.

Das Eingriffsglied des ersten oder zweiten Kraftübertragungsmittels muß nicht - wie oben beschrieben - zugleich auch das Hubelement sein, das in die Hebelschienen 10 des Hebelsystems eingreift. Eingriffsglied und Hubelement können auch unterschiedliche Bauteile sein. zwischen denen eine Kraftübertragung erfolgt.

Bei der Verwendung einer schaltbaren Kupplung zwischen dem Kurvenglied 13 des Kraftübertragungsmittels 14 und der Abtriebswelle 37 kann die Kupplung entsprechend der Verdrehstellung der Antriebswelle geschaltet werden. Ebenso können bei Verwendung von selbstschaltenden Kupplungen (z.B. von Freiläufen) Vorrichtungen vorgesehen werden, die in Abhängigkeit von der Verdrehstellung der Antriebswelle derart in die Kupplung eingreifen. daß in der Leerlaufphase die Reibung in der Kupplung reduziert und in der Schaltphase das Kupplungsspiel verringert wird.

In dem Ausführungsbeispiel nach Figur 2 a und 2 b wird ein Getriebe mit zwei Getriebeeinheiten I und II verwendet, die jedoch nicht axial nebeneinander angeordnet sind. Diese Anordnung ist dadurch möglich, weil nunmehr das Kurvenglied 20 des ersten Kraftübertragungsmittels beide Getriebeeinheiten antreibt. Das Kurvenglied 20 besteht aus zwei synchron sich drehenden, einseitig mit einer Nutkurve versehenen Kurvenscheiben 20a und 20b, die verdrehfest mit der Antriebswelle verbunden sind. Das Kurvenglied 21 des zweiten Kraftübertragungsmittels der Getriebeeinheit I und das Kurvenglied 22 des zweiten Kraftübertragungsmittels der Getriebeeinheit II bestehen ebenfalls aus jeweils zwei synchron sich drehenden und wie die Kurvenscheiben 20a und 20b aufgebauten Kurvenscheiben 21a und 21b bzw. 22a und 22b.
Infolge des geteilten Aufbaus der Kurvenglieder müssen die Eingriffsglieder 23, 24, 25 und 26, die zugleich als Hubelemente für die Übersetzungseinrichtung dienen, nicht mehr - wie im Beispiel nach Figur 1 - als Hubschlitten oder Schieber ausgeführt werden, sondern können auch als einfache Achsen mit mehreren, auf ihnen drehbar gelagerten Rollen ausgebildet sein. Dadurch wird die geradlinig gleichförmige Bewegung entsprechend dem grundlegenden Funktionsprinzip der Getriebeanordnung nur von den Mittelachsen der Eingriffsglieder ausgeführt.

Im Ausführungsbeispiel nach Figur 3 werden zwei axial nebeneinander angeordnete Getriebeeinheiten verwendet, von denen hier jedoch nur eine dargestellt ist. Zur Verhinderung von störenden Einflüssen durch Massenträgheitskräfte auf das Gestell weist das antriebsseitige Kurvenglied 27 zwei Nutkurven 28 und 29 auf, deren Kurvenflanken so gestaltet sind, daß die Eingriffsglieder 30 und 31 zu jedem Zeitpunkt eine Translationsbewegung mit gleichem Geschwindigkeitsbetrag, aber in entgegengesetzter Richtung ausführen.
Im Lastbereich besitzen die Kurvenflanken die Form einer zum gleichen erzeugenden Kreis gehörigen Kreisevolvente. Jedes der beiden Eingriffsglieder 30 bzw. 31 treibt ein Hebelsystem 32 bzw. 33, welches abtriebsseitig auf ein Eingriffsglied 34 bzw. 35 einwirkt. Die Eingriffsglieder 34, 35 liegen zentralsymmetrisch zur Drehachse eines Kurvengliedes 36, dessen zwei Nutzflanken die Form von zwei ebenfalls zentralsymmetrisch angeordneten Kreisevolventen haben. Die Eingriffsglieder 34 und 35 übertragen beide die Kraft auf das Kurvenglied 36, das wiederum absatzweise mit der Abtriebswelle gekoppelt ist.
Die Eingriffsglieder 30 und 31 sowie 34 und 35 befinden sich - wie auch die beiden Hebelsysteme 32 und 33 - ständig im gleichen, jedoch entgegengesetzt gerichteten Bewegungszustand. Ihre Massenträgheitskräfte kompensieren sich daher weitgehend und können dadurch auch kaum über das Gehäuse nach außen hin negativ wirksam werden.
Durch die paarige Anordnung werden außerdem die Kräfte. die die Eingriffsglieder auf die Kurvenglieder übertragen, im wesentlichen in auf die An- und die Abtriebswelle einwirkende Drehmomente umgewandelt und damit deren Lager entlastet.

## Patentansprüche

1. Getriebe mit stufenlos einstellbarer Übersetzung, bei dem durch wenigstens zwei zeitlich versetzt arbeitende Getriebeeinheiten die Drehbewegung einer Antriebswelle (4) absatzweise für jeweils ein Zeitintervall, bezeichnet als Kraftübertragungsphase, auf eine Abtriebswelle (37) übertragen wird, wobei jede Getriebeeinheit ein erstes Kraftübertragungsmittel (1), eine veränderbare Übersetzungseinrichtung und ein zweites Kraftübertragungsmittel (14) sowie eine selbstschaltende oder schaltbare Kupplung besitzt und wobei - unter der Voraussetzung gerade konstant gehaltener Übersetzungseinstellung - in der Kraftübertragungsphase das erste Kraftübertragungsmittel (1) die gleichförmige Drehbewegung der Antriebswelle (4) in eine gleichförmige Translationsbewegung umwandelt, die Übersetzungseinrichtung diese Bewegung in eine andere, ebenfalls gleichförmige Translationsbewegung mit einer von der Übersetzungseinstellung abhängigen Geschwindigkeit umformt und das zweite Kraftübertragungsmittel (14) diese Translationsbewegung in eine gleichförmige Drehbewegung umwandelt, die wiederum über die Kupplung auf die Abtriebswelle (37) übertragen wird,
**dadurch gekennzeichnet,**
**daß** das erste Kraftübertragungsmittel (1) und das zweite Kraftübertragungsmittel (14) jeweils ein ebenes Kurvengetriebe enthält.

2. Getriebe mit stufenlos einstellbarer Übersetzung nach Anspruch 1,
**dadurch gekennzeichnet,**
**daß** das Kurvengetriebe, welches im zweiten Kraftübertragungsmittel (14) enthalten ist, ein ebenes Kurvenglied (13), das über die Kupplung die Abtriebswelle (37) antreibt und dessen Kurvenflanke im Lastbereich als Kreisevolvente ausgebildet ist, und ein geradlinig geführtes Eingriffsglied (11) besitzt.

3. Getriebe mit stufenlos einstellbarer Übersetzung nach Anspruch 1,
**dadurch gekennzeichnet,**
**daß** das Kurvengetriebe, welches im ersten Kraftübertragungsmittel (1) enthalten ist, ein ebenes Kurvenglied (2), das von der Antriebswelle (4) angetrieben wird und dessen Kurvenflanke im Lastbereich als Kreisevolvente ausgebildet ist, und ein geradlinig geführtes Eingriffsglied (5) besitzt.

4. Getriebe mit stufenlos einstellbarer Übersetzung nach einem oder mehreren der vorhergehenden Ansprüche,
**dadurch gekennzeichnet,**
**daß** die Übersetzungseinrichtung aus einem drehbar gelagerten Hebelsystem mit Hebelschienen (10) besteht, in die ein Hubelement jedes der beiden Kraftübertragungsmittel (1,14) eingreift, wobei die Hubelemente in zueinander parallelen geradlinigen Bewegungsbahnen (C―C, D―D) geführt werden und wobei die Lage des Drehpunktes (E) des Hebelsystems derart verstellbar ist, daß das Verhältnis der Abstände zwischen dem Drehpunkt und den Bewegungsbahnen stufenlos veränderbar ist.

5. Getriebe mit stufenlos einstellbarer Übersetzung nach Anspruch 4,
**dadurch gekennzeichnet,**
**daß** das Hebelsystem in einem durch einen Rahmen (17) geführten Lagerhalter (16) drehbar gelagert ist, wobei der Rahmen mittels eines Übersetzungsstellers mit einer oder mehreren Gewindespindeln (18) parallel verschiebbar und in der vorgewählten Position fixierbar ist.

6. Getriebe mit stufenlos einstellbarer Übersetzung nach Anspruch 3,
**dadurch gekennzeichnet,**
**daß** das Kurvenglied des ersten Kraftübertragungsmittels (1) mehrere Getriebeeinheiten antreibt.

7. Getriebe mit stufenlos einstellbarer Übersetzung nach einem oder mehreren der vorhergehenden Ansprüche,
**dadurch gekennzeichnet,**
**daß** zum Massenausgleich und Lagerkräfteausgleich die Kraftübertragungsmittel (1,14) und die Übersetzungseinrichtung in jeder Getriebeeinheit jeweils paarig ausgeführt sind.

## Claims

1. A transmission gear with a steplessly adjustable translation ratio, wherein the rotary motion of a drive shaft (4) is transferred to a driven shaft (37) by at least two time staggered operating gear transmission units sequentially for in each case a time interval, designated as force transmission phase, wherein each gear transmission unit comprises a first force transmission means (1), a changeable translation device and a second force transmission means (14) as well as an automatic switching or switchable coupling and wherein - under the precondition of a just constant maintained translation setting - the first force transmission means (1) transforms the uniform rotary motion of the drive shaft (4) into a uniform rectilinear motion during the force transmission phase, wherein the translation device translates this motion into another, also uniform rectilinear motion with a speed depending on the translation setting and wherein the second force transmission means (14) transforms this rectilinear motion into a uniform rotary motion, wherein the uniform rotary motion is transferred to the driven shaft (37) through the coupling, **characterized in that** each of the said force transmission means, the first force transmission means (1) and the second force transmission means (14), includes a planar cam gear transmission.

2. A transmission gear with a steplessly adjustable translation ratio according to claim 1, wherein the cam transmission, which is contained in the second force transmission means (14), is a planar cam transmission and includes a planar cam member. (13), which drives the driven shaft (37) through the coupling and wherein curve flanks of the planar cam member (13) are formed as an involute of a circle in the load region, and wherein the cam transmission includes a straight line guided engagement member (11).

3. A transmission gear with a steplessly adjustable translation ratio according to claim 1, wherein the cam transmission, which is contained in the first force transmission means (1), is a cam transmission and includes a planar cam member (2), wherein the planar cam member (2) is driven by the drive shaft (4) and wherein curve flanks of the planar cam member (2) are formed as an involute of a circle in the load region, and wherein the cam transmission includes a straight line guided engagement member (5).

4. A transmission gear with a steplessly adjustable translation ratio according to any one or several of the foregoing claims, wherein the changeable translation device comprises a rotatably supported lever system with lever rails (10), wherein a first stroke element of the first force transmission means (1) and a second stroke element of the second force transmission means (14) engage the lever rails, wherein the first stroke element and the second stroke element are guided in a straight line motion tracks (C--C, D--D) disposed parallel to each other and wherein the position of the hinge point (E) of the lever system is such adjustable, that the ratio of the distances between the hinge point and the straight line motion tracks can be steplessly changed.

5. A transmission gear with a steplessly adjustable translation ratio according to claim 4, wherein the lever system is rotatably supported in bearing supports (16) guided through a frame (17), wherein the frame is parallel shiftable by way of a translation ratio setting device with one or several threaded spindles (18) and wherein the frame is fixable in the preselected position.

6. A transmission gear with a steplessly adjustable translation ratio according to claim 3, wherein the cam member of the first force transmission means (1) drives several gear transmission units.

7. A transmission gear with a steplessly adjustable translation ratio according to any or several of the foregoing claims, wherein the force transmission means (1,14) and the translation device are furnished in each case as pairs in each gear transmission unit for mass balancing and for bearing force balancing.

## Revendications

1. Engrenage avec une transmission réglable de façon continue, dans lequel le mouvement de rotation d'un arbre menant (4) est transmis par reprises pour respectivement un intervalle de temps, qualifié de phase de transmission de force, à un arbre de sortie (37) par au moins deux unités d'engrenage travaillant en temps différé, chaque unité d'engrenage présentant un premier moyen de transmission de force (1), un dispositif changeable de transmission et un deuxième moyen de transmission de force (14) ainsi qu'un embrayage embrayant automatiquement ou embrayable, et - à condition d'un réglage de transmission maintenu justement constant - le premier moyen de transmission de force (1) transformant le mouvement uniforme de rotation de l'arbre menant (4) en un mouvement uniforme de translation lors de la phase de transmission de force, le dispositif de transmission transformant ce mouvement en un autre mouvement de translation lui aussi uniforme avec une vitesse dépendant du réglage de transmission, et le deuxième moyen de transmission de force (14) transformant ce mouvement de translation en un mouvement uniforme de rotation qui, de son côté, est transmis par l'embrayage à l'arbre de sortie (37), **caractérisé par le fait que** le premier moyen de transmission de force (1) et le deuxième moyen de transmission de force (14) comprend respectivement une commande plane à cames.

2. Engrenage avec une transmission réglable de façon continue selon la revendication 1, **caractérisé par le fait que** la commande à cames qui est contenue dans le deuxième moyen de transmission de force (14) possède un membre plan de came (13) qui entraîne l'arbre de sortie (37) par l'embrayage et dont le flanc de came est réalisé dans la zone de charge comme développante de cercle, ainsi qu'un membre d'engrènement (11) qui est guidé de façon rectiligne.

3. Engrenage avec une transmission réglable de façon continue selon la revendication 1, **caractérisé par le fait que** la commande à cames qui est contenue dans le premier moyen de transmission de force (1) possède un membre plan de came (2) qui est entraîné par l'arbre menant (4) et dont le flanc de came est réalisé dans la zone de charge comme développante de cercle, ainsi qu'un membre d'engrènement (5) qui est guidé de façon rectiligne.

4. Engrenage avec une transmission réglable de façon continue selon l'une ou plusieurs des revendications précédentes, **caractérisé par le fait que** le dispositif de transmission se compose d'un système de leviers logé à rotation ayant des rails de levier (10) dans lesquels se prend un élément de course de chacun des deux moyens de transmission de force (1, 14), les éléments de course étant guidés dans des chemins rectilignes de mouvement (C--C, D--D) parallèles l'un à l'autre, et la position du pivot (E) du système de leviers pouvant être réglée d'une telle manière que le rapport des distances entre le pivot et les chemins de mouvement peut être varié de façon continue.

5. Engrenage avec une transmission réglable de façon continue selon la revendication 4, **caractérisé par le fait que** ledit système de leviers est logé à rotation dans un support de logement (16) mené par un cadre (17), ledit cadre pouvant être déplacé parallèlement au moyen d'un régleur de transmission avec une ou plusieurs broches filetées (18) et pouvant être fixé dans la position choisie préalablement.

6. Engrenage avec une transmission réglable de façon continue selon la revendication 3, **caractérisé par le fait que** le membre de came du premier moyen de transmission de force (1) entraîne plusieurs unités d'engrenage.

7. Engrenage avec une transmission réglable de façon continue selon l'une ou plusieurs des revendications précédentes, **caractérisé par le fait que**, pour l'équilibrage des masses et pour l'équilibrage des forces de logement, les moyens de transmission de force (1, 14) et le dispositif de transmission sont réalisés respectivement comme paires dans chaque unité d'engrenage.
